# EUROPEAN PATENT SPECIFICATION

(11) **EP 3 122 909 B1**
(45) Date of publication and mention of the grant of the patent: **28.02.2018**
(21) Application number: 15715695.1
(22) Date of filing: 27.03.2015
(51) Int. Cl.: C21B 3/08

(54) **METHOD FOR SOLIDIFYING LIQUID STEEL SLAG**
VERFAHREN ZUR VERFESTIGUNG VON FLÜSSIGER STAHLSCHLACKE
PROCÉDÉ DE SOLIDIFICATION DE LAITIER D'ACIER LIQUIDE

(30) Priority: 28.03.2014 WO PCT/EP2014/056341
(43) Date of publication of application: 01.02.2017
(73) Proprietor: ORBIX SOLUTIONS, 6240 Farciennes (BE); Université Libre de Bruxelles (ULB), 1050 Bruxelles (BE)
(72) Inventor: VAN MECHELEN, Dirk, 2830 Tisselt (BE); BOUILLOT, Frédérique, 6110 Montigny-le-Tilleul (BE); SHARMA, Sandhya, 1040 Bruxelles (BE); DELPLANCKE, Marie-Paule, 1160 Bruxelles (BE)
(74) Representative: Gevers Patents
(86) International application number: PCT/EP2015/056777
(87) International publication number: WO 2015/144903

(56) References cited:
- FR-A- 1 330 477
- GB-A- 1 058 143

## Description

The present invention relates to a method for solidifying liquid steel slag to produce solid steel slag, in particular solid steel slag which can be used, after crushing, as aggregate in construction. This method comprises the steps of pouring at least four successive layers of said liquid steel slag, comprising a lowermost layer, an uppermost layer and at least two intermediate layers, and cooling the solidified steel slag in the reservoir by applying water thereon. The liquid steel slag comprises at least the elements calcium, silicon and oxygen and has a basicity, defined as the ratio between its calcium content, expressed as wt.% CaO, and its silicon content, expressed as wt.% SiO₂, which is higher than 1.2 so that when it is slowly cooled down, at a cooling rate of for example about 10°C/min, β-dicalcium silicate is formed therein as from a first temperature.

Steel slag is a calcium silicate slag which contains in particular dicalcium silicates but also other silicates such as for example calcium magnesium silicates. A problem of such calcium silicate slags is that, upon slow cooling thereof, for example in the open air, a lot of them disintegrate into a fine powder. This is due to the formation of crystalline dicalcium silicate (C2S) phases which undergo several phase transformations during the cooling of the slag. The last transformation, which is the transformation from the β to the γ-polymorph, occurs at about 490°C, and is accompanied by a 12% volume expansion. This expansion causes high internal stresses in the slag and as a result thereof the disintegration of the solid slag into a fine powder. In contrast to the larger solid steel slag pieces, which can be crushed to produce an aggregate that can be used in construction materials such as concrete and asphalt, the fines cannot be used as such in these applications, i.a. due to their high water absorption properties, and are thus difficult to valorise.

As described for example in the article "Options to prevent dicalcium silicate-driven disintegration of stainless steel slags" of Y. Pontikes et al. in Archives of Metallurgy and Materials, Volume 55, Issue 4, several potential routes are already known for avoiding the formation of γ-dicalcium silicate. These potential routes include the chemical stabilization of the slag by additions such as borates and phosphates, the change in slag chemistry by the addition of waste glass and a fast cooling (quenching or granulation) of the liquid slag. Furthermore, GB1058143 discloses a known "slag-pit" method for solidifying slag upon water addition, wherein several slag layers are stacked upon slag disposal and cooling. By the addition of borates and phosphates the transition of the β to the γ-polymorph of dicalcium silicate can be prevented or the amount of γ-polymorph which is still formed can at least be reduced. A drawback of borates is however their relatively high cost. Moreover, borates have been found to be toxic so that at least in a number of countries they are or will be forbidden. In Europe, for example, due to the validity of REACH (EC Regulation No. 1907/2006 concerning the Registration, Evaluation, Authorization and Restriction of Chemicals), the addition of borates creates a major problem with regard to the stainless steel slag stabilization. The borates are considered to be toxic for the reproduction and are part of the CMR (Carcinogenic, Mutagenic or Toxic for the Reproduction) list of substances. Phosphates have to be used in larger amounts than borates and involve therefore also a relatively high additional cost.

By adding waste glass, or any other material that contains a large amount of silica such as quartz sand or fly ash, the chemistry of the steel slag can be changed, i.e. the basicity thereof can be reduced, so that the presence of C2S can be avoided. To avoid the formation of C2S, the slag composition should conform to either one of the following relations:

CaO + 0.8MgO ≤ 1.20SiO₂ + 0.39Al₂O₃ (+ 1.75S)

CaO ≤ 0.93SiO₂ + 0.55Al₂O₃ (+ 1.75S)

To meet either one of these relations, a quite large amount of waste glass has to be added. Sakamoto (in "Effects of MgO based glass addition on the dusting of stainless steel slag" in Current Advance in Material and Processes, 14(4):939, 2001) showed for example on a laboratory scale that stainless steel decarburization slag could be stabilized with 12 wt.% of waste glass containing 70-75 wt.% SiO₂. Although the cost of such glass addition is much lower than the cost of a borate addition, an additional slag treatment process is required to be able to dissolve such large amount of glass in the industrially used slag pots. Additional heat required to dissolve the glass could for example be generated by injecting oxygen in the slag pot. If the slag contains FeO, the injected oxygen could react exothermally with this iron oxide to produce Fe₂O₃. This additional treatment involves additional time and costs and requires the presence of a sufficient amount of FeO in the slag. The required amount of glass cannot be added to the steel furnace itself since low basicity slags cause rapid refractory degradation and, in stainless steel making, low chromium yields. The present inventors have done tests wherein a relatively large amount of waste glass was first applied in a slag pot before the liquid steel slag was poured therein. Although the heat of the liquid slag was high enough to melt the glass, a problem was how to mix the glass homogeneously in the liquid slag and this without too many heat losses. For large amounts of glass, only a part of the waste glass melted. A drawback of an incomplete melting of the glass is that glass inclusion can be formed in the solid slag which, when used as construction material, may cause deleterious swelling reaction as a result of the so-called alkali-silicate reactions.

The third route of reducing or avoiding the formation of γ-dicalcium silicate consists in a fast cooling of the steel slag. As set forth in the above-mentioned article of Y. Pontikes et al. the cooling rate required to avoid the formation of γ-dicalcium silicate is however quite high. This cooling rate should be about 5°C/s. A drawback of such a fast cooling process is that the required cooling rate cannot be achieved in a slag yard where the slag pots are poured out and the steel slag is solidified by air-cooling, even when this air-cooling is assisted by spraying water onto the solidified slag. A very fast cooling can only be achieved by an air or water granulation technique wherein the liquid slag is solidified and cooled down in a jet of air or water. Due to this fast cooling, a large portion of the solidified steel slag is moreover amorphous (glassy), which is not desired when using the steel slag as an aggregate in concrete or in road constructions. Indeed, the amorphous phases bind less strongly to cement and also reduce the polished stone value (PSV) of the aggregate (determined for example in accordance with BS EN 1097 Part 8), which is an important parameter when used in road constructions. Indeed, in the construction of a road, the surface layer needs to retain its roughness for as long as possible in order to provide skid resistance for traffic. The higher the polished stone value the longer the aggregate will remain rough when used in road surfacing. A final drawback of water or air granulation techniques are that a quite fine aggregate is produced, which is less valuable than coarser aggregates.

Tests wherein a steel slag is solidified by means of a water granulation technique are disclosed for example in the article "Treatments of AOD slag to Enhance Recycling and Resource Conservation" by Q. Yang in Proceedings of Securing the Future, Int. Conf. on Mining and the Environment, Metals and Energy Recovery, June 27-July 1, 2005, Skelleftea, Sweden. Slow cooling, at an average rate of about 60°C/min from 1550°C to 623°C, resulted in a low glass content (3%) but a lot of fines (90% smaller than 100 µm) whilst fast cooling by water granulation, within less than one minute, resulted in a high glass content of about 24% and a particle size between about 0.2 and about 3 mm.

Water granulation tests, wherein the liquid steel slag is solidified within one minute, are also described in the article "Dissolution Behavior of Fluorine in AOD slag from the Production of Stainless Steel after Treatment for Volume Stabilization" by Q. Yang et al. A. 2012 Scanmet IV: 4th International Conference on Process Development in Iron and Steelmaking. Lulea: MEFOS, Vol. 2, p. 517-526. By water granulation the presence of γ-dicalcium silicate could be avoided whereas by more slowly cooling the slag, within about 5 hours from 1600°C to room temperature (i.e. at an average cooling rate of about 5°C/min), γ-dicalcium silicate was still formed.

Tests wherein a steel slag is solidified by means of an air granulation technique are disclosed for example in the article "Stabilization Studies of EAF Slag for Its Use as Materials in Construction" by Q. Yang et al. in Proceedings, Asiasteel 24 Sep 2012, The Chinese Society for Metals, 6 p. In the air granulation test, wherein the steel slag was cooled down in an air stream in about one minute, the slag was stabilized so that no fines were produced. In the slow cooling test, wherein the slag was again cooled down within 5 hours from 1600°C, i.e. at an average cooling rate of about 5°C/min, the slag disintegrated into fines.

An object of the present invention is to provide a new method for solidifying a liquid steel slag which enables to reduce the formation of fines, or in other words the formation of γ-dicalcium silicate, by a cooling process which does not require a fast cooling, i.e. a cooling rate of at least 5°C/s, and which in particular does not require an air or water granulation step so that the formation of relatively large amounts of amorphous/glassy phases can be avoided.

To this end, the method according to the present invention is characterised in that
- said reservoir has a bottom delimited by side walls, which bottom has a surface area of S m²;
- said successive layers of liquid steel slag are poured on top of one another in said reservoir, with at least said intermediate layers having a volume of at least S x 0.03 m³ and;
- said water cooling step is started after having poured said uppermost layer of liquid steel slag in the reservoir; and
- the temperature of each of said intermediate layers, determined as a volume weighted average over the respective intermediate layer, is kept at least until the start of said water cooling step, and this for at least one hour, preferably for at least two hours, between 1300°C and a minimum temperature which is equal to or higher than said first temperature, i.e. equal to or higher than the temperature at which β-dicalcium silicate is formed when slowly cooling the liquid steel slag.
Slowly cooling refers to a cooling rate of 10°C/min. In the method of the present invention the steel slag is cooled by means of water which is applied on top of the uppermost layer. Due to the large volume of the layers of solidified steel slag, and the relatively low thermal conductivity thereof, the fast cooling rate of at least 5°C/s required to prevent the transition of β to γ-dicalcium silicates cannot be achieved by applying water on top of the solidified layers of steel slag. As a matter of fact, it takes several hours, or even days, to cool down a large volume of steel slag. According to the invention it has however now been found that, even without a fast cooling of the liquid steel slag, in particular without an air or water granulation of the liquid steel slag, the formation of γ-dicalcium silicate can still be considerably reduced by keeping the steel slag for a sufficiently long period of time at a relatively high temperature, in particular at a temperature which is higher than the temperature at which β-dicalcium silicate is formed.

The method of the present invention thus comprises two cooling phases, namely a first cooling phase wherein the liquid steel slag is allowed to solidify and kept for a period of time at a relatively high temperature of between 1300°C and the temperature as from which β-dicalcium silicate is being formed, and a subsequent second cooling phase wherein the solidified steel slag is further cooled down with water, in particular at least until the temperature of each of the intermediate solidified slag layers is lower than 400°C, preferably lower than 300°C and more preferably lower than 200°C. During this second cooling phase, the intermediate slag layers are cooled down relatively fast to a temperature which is lower than the temperature at which the transition from the β to the γ-polymorph of dicalcium silicate takes place (which occurs in pure dicalcium silicate at a temperature of about 490°C).

The first cooling phase is intended to allow the formation of crystalline phases different from dicalcium silicate phases. These crystalline phase comprise in particular calcium magnesium silicate (CMS) phases such as merwinite (C3MS2), bredigite (C7MS4) and diopside (CMS2). They are formed by crystallisation of the liquid phases contained in the steel slag and also by transformation of the dicalcium silicate phases which are formed at higher temperatures, in particular from α and/or α'-dicalcium silicate phases. It was found that during the subsequent second cooling step, considerably less dicalcium silicates are formed which may be explained by the fact that β-dicalcium silicate is formed less easily/quickly from calcium magnesium silicate phases than from α or α'-dicalcium silicate phases.

In a preferred embodiment of the method according to the invention, the minimum temperature above which the temperature of each of the intermediate layers is kept at least until the start of the water cooling step is equal to or higher than 700°C, preferably equal to or higher than 750°C, more preferably equal to or higher than 800°C, most preferably equal to or higher than 850°C and even more preferably equal to or higher than 900°C.

These temperatures are all higher than the temperature at which β-dicalcium silicate is formed. In pure dicalcium silicate the transition from α' to β-dicalcium silicate occurs indeed at 675°C. A higher temperature is however preferred in particular when bredigite is formed in the steel slag. Bredigite (C7MS4) is indeed a metastable phase which is only stable at higher temperatures. At lower temperatures, it may transform again into dicalcium silicate phases. By keeping the temperature higher, more bredigite, if formed, thus remains in the slag.

In another preferred embodiment of the method according to the invention the temperature as from which β-dicalcium silicate is formed in the steel slag when cooling the liquid steel slag down to room temperature is lowered by adding a phosphorus containing compound to the liquid slag, in particular a phosphate and/or a pyrophosphate containing compound.

It has been found that by adding a phosphorus containing compound to the liquid steel slag not only the transition from β to γ-dicalcium silicate is reduced but also the temperature as from which β-dicalcium silicate is formed is lowered. In the method according to the present invention, the temperature of the different layers can thus be kept more easily sufficiently high to avoid the formation of β-dicalcium silicate during the first cooling phase.

In a further preferred embodiment of the method according to the invention, the basicity of the liquid steel slag, defined as the ratio between its calcium content, expressed as wt.% CaO, and its silicon content, expressed as wt.% SiO₂, is lowered by adding a glassy material thereto after the liquid steel slag has been separated off from the liquid steel, which glassy material has a further basicity, defined as the ratio between its calcium content, expressed as wt.% CaO, and its silicon content, expressed as wt.% SiO₂, which is smaller than 0.20, and preferably smaller than 0.15. The glassy material comprises preferably at least 50 wt.%, more preferably at least 60 wt.% silicon expressed as SiO₂. The glassy material preferably comprises glass that has preferably been crushed, in particular soda-lime-silica glass.

A first effect of the addition of the glassy material is that the basicity of the steel slag is lowered so that less dicalcium silicate is formed therein upon cooling. The glassy material is however preferably applied in relatively small amounts, which can be dissolved more easily homogenously in the liquid slag but which are not enough to avoid entirely the formation of dicalcium silicates.

Another effect of the addition of the glassy material is that upon cooling of the liquid slag less bredigite is formed therein and more merwinite. In contrast to bredigite, merwinite has the advantage of being a stable phase. Consequently, even when the temperature of the steel slag during the first cooling phase is somewhat lower, merwinite remains as such in the steel slag and can thus not increase the formation of dicalcium silicate phases below a certain temperature at which bredigite would no longer be stable.

Other particularities and advantages of the invention will become apparent from the following description of some particular embodiments of the method according to the present invention. The reference numerals used in this description relate to the annexed drawings wherein:
Figure 1 illustrates schematically the reservoir filled with successive layers of liquid steel slag;
Figure 2 shows the phase formations in an AOD slag calculated with the Slag-A model with manual addition of bredigite;
Figure 3 is a graph showing the resulting temperature of a mixture of steel slag, at a temperature of 1600°C, and different amounts of glass at a temperature of 25°C;
Figure 4 shows the phases present in the steel slag upon addition of different amounts of glass, at a temperature of 25°C, to liquid steel slag at a temperature of 1600°C.
Figure 5 shows the phase formations in the same AOD slag as in Figure 2, calculated again with the Slag-A model with manual addition of bredigite, but with addition of 5% of glass to the liquid steel slag;
Figure 6 is a graph showing the relationship between the amount of calcium magnesium silicates and the amount of dicalcium silicates in the different solidified steel slag layers of Experiment 3;
Figure 7 is a graph showing the amounts of calcium magnesium silicates and the amounts of dicalcium silicates in the different solidified steel slag layers of Experiment 3 in function of the calculated average temperature of each of the steel slag layers just before a next layer is applied on top of it;
Figure 8 is a graph showing the relationship between the amount of dicalcium silicates in the different solidified steel slag layers of Experiment 3 in function of the average temperature of each of the steel slag layers just before a next layer is applied on top of it; and
Figure 9 shows the evolution of the temperature measured at one location in the lowermost layer and in the first intermediate layer of Experiment 3 in function of the time.

The present invention relates to a method for solidifying liquid steel slag to produce solid steel slag. The solid steel slag is a calcium silicate slag which may contain different crystalline phase such as dicalcium silicate phases, calcium magnesium silicate phases and other phases. The steel slag is in particular a stainless steel slag. It can in particular be an AOD (Argon Oxygen Decarburization), a VOD (Vacuum Oxygen Decarburization) an EAF (Electric Arc Furnace) slag or a combination thereof. When the steel slag consists of steel slag materials of different origins, they do not have to be mixed but they can be applied separately on top of one another as described further hereinafter.

In order to be able to valorise the resulting solid steel slag as much as possible, it should contain a minimum amount of fines, in particular a minimum amount of particles smaller than 0.5 mm. These fines are mainly the result of a disintegration of the slag which is driven by the irreversible β to γ-C2S phase transformation causing a volume expansion of about 12%. During this phase transformation high internal stresses thus occur in the slag, as a result of which the slag disintegrates into fine particles. The coarser part of the solid steel slag can be used, after crushing and sieving, as fine or coarse aggregates, in particular in concrete and asphalt. Dicalcium silicate phases are formed in the steel slag when the steel slag has a basicity, defined as the ratio between its calcium content, expressed as wt.% CaO, and its silicon content, expressed as wt.% SiO₂, which is higher than 1.2 so that the present invention is intended to solidify such steel slag material whilst reducing or preventing the formation of fines, having in particular a size of less than 0.5 mm.

In accordance with the present invention the amount of fines is reduced by a particular cooling method. In practice the liquid slag which is separated off from liquid steel, in particular from liquid stainless steel, is applied in a slag pot 1 and is transported in this slag pot 1 to a slag yard. When the liquid slag is applied in the slag pot, it has a temperature which is usually higher than 1500°C, for example in the range of 1550°C to 1750°C. Before being transported to the slag yard, and during the transport itself, the liquid slag cools down in the slag pot, depending on the residence time in the slag pot.

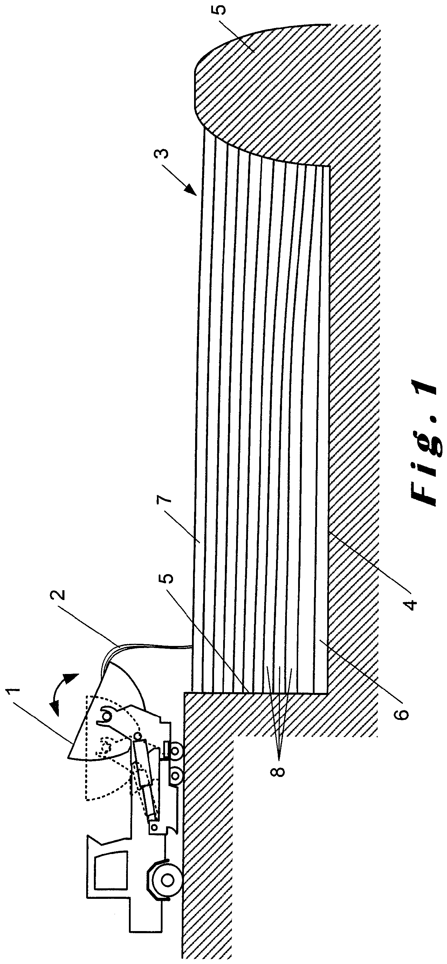

As illustrated in Figure 1, the liquid slag 2 is poured in different successive layers in a reservoir 3. This reservoir 3 has a bottom 4 delimited by side walls 5. The successive layers comprise at least a lowermost layer 6, an uppermost layer 7 and at least two intermediate layers 8. The lowermost layer 6 is normally the layer which is applied onto the bottom 4 of the reservoir 3 but it can also be one of the higher layers, especially when the bottom 4 of the reservoir is too cold and/or the layer applied onto this bottom 4 too thin to ensure the minimum temperature of the layer applied on top thereof. It is thus possible that two or even more lowermost layers 6 are first applied in the reservoir 3.

Each of the successive layers is usually applied by pouring one slag pot 1 in the reservoir. However, it is also possible to pour two or more slag pots 1 at the same time, or shortly after one another (so that the steel slag from the first slag pot has not solidified yet, for example with a time interval of less than 5 minutes), in the reservoir so that the liquid slag of these slag pots 1 flows together and forms one layer of liquid steel slag 2 in the reservoir 3. After having poured the uppermost layer 7 in the reservoir 3, water is applied, in particular sprayed, onto the steel slag in the reservoir 3 to cool the solidified steel slag layers 6-8. This water cooling step is preferably started at least one hour, preferably at least two hours and more preferably at least three hours after having poured the uppermost layer 7 of liquid steel slag 2 in the reservoir 3. In this way, the intermediate layers 8, which are intended to produce a solid steel slag with less fines, are kept for a longer time at a higher temperature before cooling them down with water. The water cooling step is preferably started less than ten hours, preferably less than seven hours and more preferably less than five hours after having poured the uppermost layer 7 of liquid steel slag in the reservoir 3. In this way, the intermediate layers 8 are not allowed to cool down to a too low temperature before they are cooled more quickly with water.

An important feature of the present invention is indeed that the temperature of each of the intermediate layers 8 should be kept at least until the start of the water cooling step, i.e. until the moment water is applied onto the uppermost layer, and this for at least one hour and preferably for at least two hours, between 1300°C and a minimum temperature which is equal to or higher than the temperature as from which β-dicalcium silicate is formed in the steel slag when the liquid steel slag is cooled down to room temperature, in particular at a cooling rate of about 10°C/min. This temperature can be determined by means of a DTA analysis (Differential Thermal Analysis) wherein the steel slag is cooled down for example at a rate of about 10°C/min. The temperature of each of the intermediate layers 8 is defined herein as a volume weighted average over the respective intermediate layer. If 1/3th of the layer has a temperature of 700°C, 1/3th a temperature of 720°C and 1/3th a temperature of 750°C then the temperature of the layer is equal to 1/3x700°C + 1/3x720°C + 1/3x750°C = 723°C.

The minimum temperature is preferably equal to or higher than 700°C, more preferably equal to or higher than 750°C, most preferably equal to or higher than 800°C, and even more preferably equal to or higher than 850°C or even equal to or higher than 900°C. The temperature of each of said intermediate layers 8 (determined as a volume weighted average over the respective intermediate layer 8), is preferably kept before the start of said water cooling step, for at least one hour, preferably for at least two hours, below 1200°C, and preferably below 1100°C.

During this first slow cooling phase, at these relatively high temperatures, crystalline phases different from dicalcium silicates are formed. The steel slag usually comprises not only the elements calcium, silicon and oxygen but also magnesium (in an amount which is preferably higher than 4 wt.%, more preferably higher than 6 wt.% and most preferably higher than 8 wt.%). The presence of magnesium causes the formation of calcium magnesium silicates, in particular of merwinite and/or bredigite, during the first cooling phase at these relatively high temperatures rather than dicalcium silicates, more particularly rather than α'-dicalcium silicates. Dicalcium silicates (α or α') which were formed at higher temperatures are being transformed during this first cooling phase into other crystalline phases, in particular into calcium magnesium silicate phases. During the subsequent cooling phase with water, these crystalline phases, which are different from dicalcium silicate, transform less easily into β and subsequently into γ-dicalcium silicate so that by increasing the amount of these crystalline phases the disintegration of the steel slag can be considerably reduced.

The successive layers 6-8 of liquid steel slag 2 are poured at predetermined temperatures and at predetermined time intervals on top of one another in said reservoir 3. The temperature of each of these intermediate layers 8 can be kept above the above described minimum temperature by keeping said predetermined temperatures sufficiently high and said predetermined time intervals sufficiently short. The predetermined time intervals are in particular shorter than 90 minutes, preferably shorter than 75 minutes, more preferably shorter than 60 minutes and most preferably shorter than 50 minutes. The predetermined temperatures of the liquid steel slag 2 upon being poured in said successive layers are in particular higher than 800°C, preferably higher than 900°C and more preferably higher than 950°C or even higher than 1000°C. In order to enable the different layers of liquid steel slag to solidify to some extent before the next layer is poured on top thereof, the predetermined intervals between the different pouring steps are preferably longer than 5 minutes, more preferably longer than 10 minutes and most preferably longer than 15 minutes.

The intermediate layers 8 should further have a sufficiently large average thickness to avoid a too quick cooling of the steel slag in the respective layer (before a next layer is applied on top thereof) and to enable to produce a sufficiently coarse aggregate by crushing the solidified steel slag within each intermediate layer 8. When the bottom 4 of the reservoir 3 has a surface area of S m², the intermediate layers 8 should each have a volume of at least S x 0.03 m³ so that the intermediate layers 8 have an average thickness of at least 0.03 m. The volume of the intermediate layers 8 is preferably at least S x 0.04 m³ and more preferably at least S x 0.05 m³.

The intermediate layers 8 are preferably not too thick so that the steel slag is of a more uniform temperature within each layer. In this way too hot areas, wherein in particular α-dicalcium silicate could be formed instead of calcium magnesium silicates during the first cooling phase, and/or too cold areas wherein in particular β-dicalcium silicate could already be formed, can be prevented. The volume of the intermediate layers of liquid steel slag is therefore preferably at most S x 0.5 m³, more preferably at most S x 0.4 m³, most preferably at most S x 0.3 m³ and even more preferably at most S x 0.2 m³.

The temperature of each of the intermediate layers 8, determined as a volume weighted average over the respective intermediate layer, drops preferably at an average rate which is not higher than 50°C/min, preferably not higher than 40°C/min, more preferably not higher than 30°C/min and most preferably not higher than 20°C/min as from having applied the liquid steel slag until the layer is being covered by a further intermediate layer 8 or by said uppermost layer 7. This slow cooling rate can be achieved by allowing the intermediate layer to cool by air cooling, i.e. by being in contact with the atmosphere. Avoiding higher cooling rates is advantageous in view of the fact that by these relatively low cooling rates, the produced solid steel slag contains a smaller amount of amorphous phases (compared to the existing processes wherein the steel slag poured in the slag yard is immediately cooled down by water spraying to achieve a fast cooling limiting the transition of β into γ-dicalcium silicates). Preferably the cooling rate is so low that the produced solid steel slag contains less than 10 wt.%, preferably less than 7 wt.%, and more preferably less than 5 wt.% of amorphous phases. An advantage of such small amounts of amorphous phases is that the aggregates produced from the steel slag have a high PSV value. Although less preferably, a small amount of water could be sprayed on top of the different successive layers 6-8 to accelerate the cooling/solidification of the steel slag before a next layer is applied on top thereof but this amount should not be too large to prevent a too fast cooling of the steel slag and to enable to maintain the temperature of the intermediate layers above the above described minimum temperature until the actual cooling step with water. In this respect, the reservoir is preferably shielded off from the rain.

During the water cooling step, water is applied onto the uppermost steel slag layer 7. This water is applied preferably at least until the temperature of each of said intermediate layers 8 (i.e. their volume weighted average temperature) is lower than 400°C, preferably lower than 300°C and more preferably lower than 200°C. Applying water onto the uppermost steel slag layer 7 is preferably stopped when the temperature of this uppermost steel slag layer 7 is still higher than 100°C. In this way all of the applied water evaporates resulting in a dry steel slag material. The cooling water is preferably sprayed onto the uppermost steel slag layer 7 and is applied preferably at such a flow rate that no water accumulates onto the uppermost steel slag layer 7, i.e. so that the flow rate at which the water is applied is equal to or smaller than the rate at which the water evaporates. It was found that in this way the most effective cooling of the steel slag layers 6-8 could be achieved.

The successive steel slag layers 6-8 have preferably a total height of less than 2.0 m, preferably less than 1.8 m, more preferably less than 1.6 m and most preferably less than 1.4 m. In this way, a sufficiently quick cooling of all of these layers can be achieved by applying water on top of the uppermost layer 7.

The liquid steel slag 2 has a predetermined basicity, defined as the ratio between its calcium content, expressed as wt.% CaO, and its silicon content, expressed as wt.% SiO₂. This basicity is in particular so high that upon a slow cooling of the steel slag, dicalcium silicates are formed leading to a (partial) disintegration of the steel slag, i.e. to a so-called dusting or falling of the steel slag. The basicity is more particularly usually higher than 1.2, in particular higher than 1.4 and often higher than 1.6. The basicity of EAF slags is usually lower than the basicity of AOD or VOD slags. EAF slags may have for example a basicity of about 1.4 whilst AOD slags have for example a basicity of 1.7 or even higher so that AOD slags are more prone to dusting than EAF slags.

In the method of the present invention, the basicity of the liquid steel slag is preferably lowered by adding a glassy material thereto after the liquid steel slag has been separated off from the liquid steel. This glassy material has a basicity, defined as the ratio between its calcium content, expressed as wt.% CaO, and its silicon content, expressed as wt.% SiO₂, which is smaller than 0.20, and preferably smaller than 0.15. The glassy material preferably comprises at least 50 wt.%, more preferably at least 60 wt.% silicon expressed as SiO₂ and comprising in particular glass, preferably waste glass, that has preferably been crushed. The glass may in particular be soda-lime-silica glass. Such glass is available as waste material and is known as glass cullet. The glassy material preferably comprises magnesium, in particular in an amount of at least 1.0, preferably at least 2.0 wt.%. An advantage of additional magnesium is that it can contribute in the formation of calcium magnesium silicate phases. Moreover, in case of the steel slag comprises chromium, for example stainless steel slag, a magnesiochromite spinel phase can be formed which reduces the leaching of chromium from the steel slag.

The glassy material can be admixed to the liquid slag when the liquid slag is being poured in the slag pot 1. It is however easier to apply the glassy material separately into the slag pot, in particular by applying it in the slag pot before introducing (pouring) the liquid steel slag therein. Tests have demonstrated that when introducing 3 wt.% of glass cullet in the slag pot before pouring the liquid steel slag therein (having a temperature higher than 1500°C), more than 99% of the glass cullet dissolved in the liquid steel slag. More glass cullet could be dissolved in the liquid steel slag by injecting the glass cullet in the steel slag which is being poured in the slag pot. When injecting for example about 5 wt.% of glass cullet in the flow of liquid steel all of the glass cullet dissolved therein. Calculations have shown that when adding for example 15 wt.% of glass cullet (having a temperature of 25°C) to the liquid steel slag, the temperature thereof only drops with somewhat more than 200°C so that the liquid steel slag contains enough heat to dissolve quite large amounts of glass cullet.

The glassy material is however added to the liquid steel slag in an amount which is preferably less than 10 parts by weight, preferably less than 9 parts by weight and more preferably less than 8 parts by weight, per 100 parts by weight of the liquid steel slag. The smaller the amount of glassy material, the easier it can be dissolved homogeneously in the liquid steel slag.

An advantage of the addition of a glassy material to the liquid steel slag is that the basicity of the liquid steel slag is reduced. More importantly, however, in combination with the above described solidification method of the present invention, the addition of a glassy material has additional, synergetic effects. Indeed, the addition of glass reduces the formation of bredigite during the first cooling phase and increases the formation of merwinite. This effect can already be demonstrated at relatively low amounts of glassy material. The reduction of the amount of bredigite in favour of the formation of other calcium magnesium silicate phases has the important advantage that, in contrast to these other phases, bredigite is metastable and may thus lead to the formation of dicalcium silicate upon cooling of the steel slag, in particular during the water cooling phase. Due to the large volume of solidified steel slag contained in the different layers, a fast cooling thereof (as by water or air quenching) is indeed not possible.

### Calculations on slag mineralogy and glass additions

The above described effects of the solidification method of the present invention and also of the special effects of the addition of glass in combination with this solidification method can be explained based on the following calculations. These calculations are made for an average AOD slag having the following composition:

**Table 1: Average composition (in wt.%) of the AOD slag used in the FactSage Slag-A model calculations**

| CaO | SiO₂ | Al₂O₃ | TiO₂ | MgO | CaF₂ |
|---|---|---|---|---|---|
| 51.9 | 30.6 | 1.7 | 1.1 | 7.8 | 6.9 |

Calculations were made on the equilibrium mineralogy to be expected at different temperatures with the FactSage Slag-A model with manual addition of bredigite (Ca₇MgSi₄O₁₆ or C7MS4), with a stability range of about 900-1300°C. On the C2S behaviour, the model could only predict the transition to γ from α' directly. β-C2S was not considered a stable phase as it only forms because it is easier to nucleate than γ-C2S. In practice, a transition from α'-C2S to β-C2S occurs, and further a transformation from β-C2S to γ-C2S (destructive and to be avoided) occurs if not blocked by boron (and/or quenching).

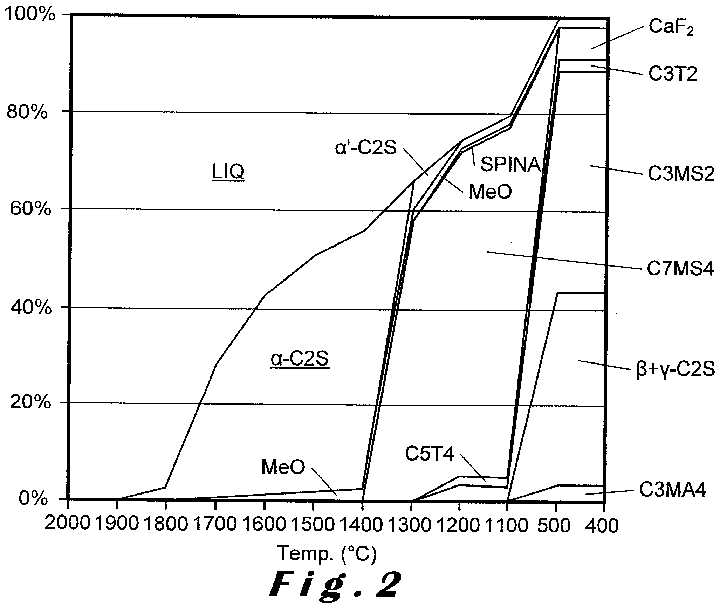

Figure 2 shows the phase formation in the AOD slag upon slowly cooling thereof so that the different phases are in equilibrium at the different temperatures for which equilibrium calculations were made. Between these calculated data, linear lines were drawn. The equilibrium states were only calculated for a limited number of temperatures, more particularly for 2000; 1900; 1800; 1700; 1600; 1500; 1400; 1300; 1200; 1100; 500 and 400°C. These graphs therefore do not show exactly as from which temperature the different crystalline phases are formed, in particular not the temperature as from which β-C2S is formed since there are no calculations in the range between 1100 and 500°C.

The following phases were indicated in Figure 2:
LIQ : liquid phase
α-C2S : α-dicalcium silicate = α-Ca₂SiO₄
α'-C2S : α'-dicalcium silicate = α'-Ca₂SiO₄
MeO : magnesium oxide
SPINA : spinel = Me²⁺Me³⁺₂O₄
C7MS4 : bredigite = Ca₇MgSi₄O₁₆
CaF₂
C5T4 : Ca₅Ti₄O₁₃
C3T2 : Ca₃Ti₂O₇
C3MS2 : merwinite = Ca₃MgSi₂O₈
β+γ-C2S : beta and gamma dicalcium silicate
C3MA4 : Ca₃MgAl₄O₁₀

In Figure 2 it can be seen that at higher temperatures α-C2S is first formed. In a next phase, the main phase that is formed is bredigite. At 1100°C, this bredigite forms about 70% of the slag. Upon further slow cooling, the bredigite mainly transforms into merwinite and dicalcium silicate (β-C2S which subsequently transforms into γ-C2S: not indicated in Figure 2). From Figure 2 it thus appears that when slowly cooling the slag during the first cooling phase of the method of the present invention, the α-C2S which is already present in the steel slag at high temperatures (occurring in the slag pot) is allowed to disappear and bredigite is allowed to form. If α-C2S would not be allowed to disappear due to the fact that the slag would not be cooled sufficiently slowly during the first cooling phase, it would subsequently transform more easily than bredigite, and in particular than merwinite, into beta and gamma dicalcium silicate.

A further calculation was made with the same model but with the addition of glass. The glass had the following composition:

**Table 2: Composition of the glass (in wt.%) added to the AOD slag used in the FactSage Slag-A model calculations**

| CaO | SiO₂ | Al₂O₃ | Fe₂O₃ | MgO | Na₂O | K₂O |
|---|---|---|---|---|---|---|
| 7.15 | 70.49 | 2.72 | 0.29 | 3.82 | 12.2 | 2.76 |

As potassium is not modelled well in the FactSage databases, the K₂O content was added to the Na₂O content.

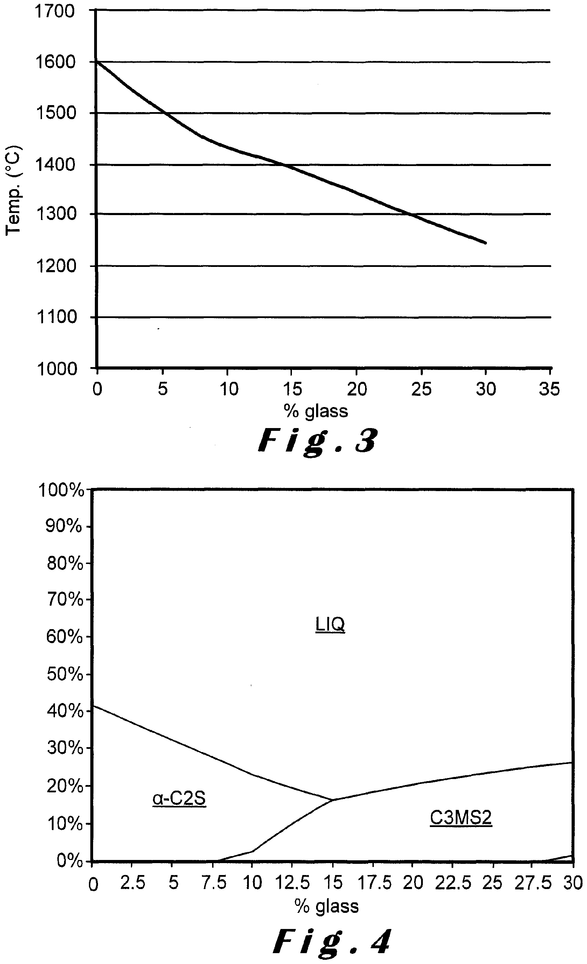

Upon addition of glass at 25°C to the slag at 1600°C, the temperature of the slag dropped drastically as shown in Figure 3. This is the result of an adiabatic calculation of slag and glass, which assumes that there are no losses to the environment or to stirring gas etc. When adding 15% of glass, the temperature drops by more than 200°C.

Figure 4 shows the phases present in the slag upon addition of glass (% on X-axis) at the temperature resulting from the mixing of the slag with the added amount of glass. Figure 4 shows that the liquid fraction does not decrease, because the low melting point of the glass and the disappearance of the (high melting) C2S phase. When adding 15% glass, the liquid fraction should rise from 60 to 80%. When adding more glass, the liquid fraction decreases again due to the formation of merwinite.

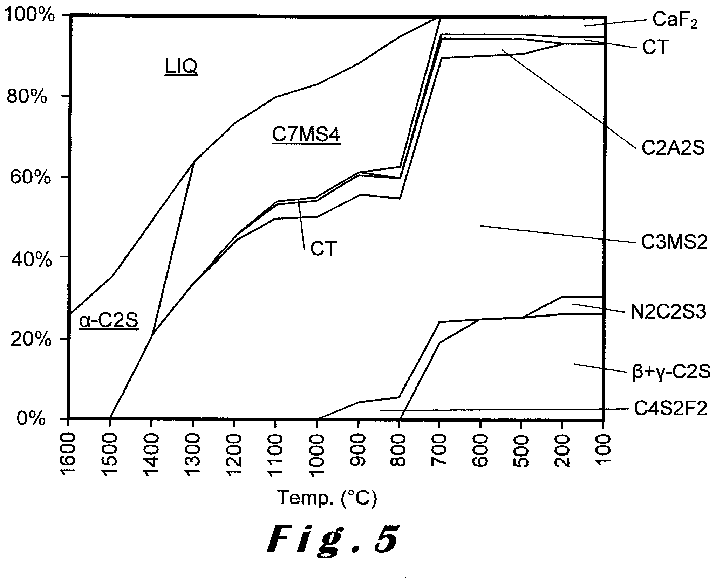

Figure 5 shows the phases in the slag as a function of temperature for an addition of 5 wt.% of glass. The different equilibrium states have been calculated at temperatures of 1600; 1500; 1400; 1300; 1200; 1100; 1000; 900; 800; 700; 600; 500; 200 and 100°C.

The following phases were indicated in Figure 5:
LIQ : liquid phase
α-C2S : α-dicalcium silicate = α-Ca₂SiO₄
C7MS4 : bredigite = Ca₇MgSi₄O₁₆
CaF₂
CT : CaTiO₃
C2A2S : Ca₂Al₂SiO₇
C3MS2 : merwinite = Ca₃MgSi₂O₈
N2C2S3 : Na₂Ca₂Si₃O₉
C4S2F2 : cuspidine = Ca₄Si₂F₂O₇
β+γ-C2S : beta and gamma dicalcium silicate

When comparing Figure 5 with Figure 2 it can be seen that, at temperatures higher than 800°C, the amount of bredigite is reduced considerably (at 1100°C from about 70% to about 24%) whilst the amount of merwinite is increased considerably (at 1100°C from about 3% to about 47%). The slow cooling process, at high temperature, of the present invention enables thus, in combination with the addition of glass, to form more of the stable merwinite than of the metastable bredigite. After addition of 5 wt.% of glass, nucleation of merwinite starts already at a temperature between 1400 and 1500°C whilst without the addition of glass the nucleation of merwinite starts only at a lower temperature, i.e. at a temperature between 1200 and 1300°C. As appears from Figure 5 bredigite converts during a further slow cooling process mainly into dicalcium silicates. Additionally, the addition of glass causes a reduction of the amount of dicalcium silicate at lower temperatures, but this reduction (from about 40% to about 24%) is considerably smaller than the effect of the glass addition on the amounts of bredigite and merwinite. The method of the present invention enables thus to considerably improve the effect of the glass addition, and enables in particular to achieve a considerable effect on the formation of fines with only a limited amount of glass.

To further reduce the formation of fines, the usual borates can be added to the liquid slag. These borates reduce the transition of β to γ-dicalcium silicate. An additional advantage of the addition of borates is that they lower the temperature of the phase transformation from α' to β-C2S. In pure dicalcium silicate α'-C2S transforms to β-C2S at a temperature of 675°C. A differential thermal analysis (DTA) has been carried out on dicalcium silicate doped with 0.13 wt.% of disodium tetraborate (Na₂B₄O₇). The α' to β phase transition occurred at an average temperature of 638°C, i.e. at a temperature which is about 37°C lower than the temperature at which this phase transition occurs without the addition of borate.

A same effect can be achieved by the addition of a phosphorus containing compound. A DTA analysis has also been carried out on dicalcium silicate doped with 2 wt.% of a composition composed of about 50% CaF₂ and about 50% of {(Ca₅(PO₄)₃OH) + (Ca₅(PO₄)₃F)}. The α' to β phase transition occurred at an average temperature of 641 °C, i.e. at a temperature which is about 34°C lower than the temperature at which this phase transition occurs without the addition of the phosphorus containing compound. In contrast to borates, such phosphorus containing compounds, in particular phosphate and/or pyrophosphate containing compounds, have no toxic effect and can thus freely be added to the liquid steel slag. The phosphorus containing compound does not only reduces the transformation from β to γ-C2S but also lowers the temperature as from which β-C2S is formed when cooling down the liquid steel slag. In this way, it is thus easier in the method of the present invention to keep the layers of steel slag during the first cooling phase at a temperature which is higher than the temperature at which β-C2S starts to be formed in the steel slag.

### Experimental test results

### Experiment 1

In this experiment slag pots wherein liquid AOD slag was allowed to cool to a temperature lower than 1000°C were poured in layers in a reservoir without a fast cooling with water. This resulted in an amount of fines of more than 80%. When pouring the slag pots in layers in the reservoir when the steel slag still had a temperature of at least 1000°C, and when subsequently cooling the stack of layers by spraying water onto them, a solidified steel slag which contained nearly no fines was obtained.

### Experiment 2

A same experiment was done, with the same AOD slag, with a combination of hot (>1000°C) and cold (<1000°C) slag pots. In one test the amount of hot pots was 55% and the amount of cold pots 45%. This resulted in 20% of fines. A combination of 2% of hot pots and 98% of cold pots resulted in about 80% of fines.

### Experiment 3

22 slag pots with varying amounts of liquid steel slag (AOD and EAF) were poured at different temperatures (mainly due to different residence times in the slag pots) and at different time intervals in a slag reservoir having a bottom with a surface area of 6 x 20 m². The total height of the stack of layers was about 1.4 m. 4.5 hours after having poured the uppermost layer in the reservoir, water was sprayed on top of it. The surface temperature of each of the layers was measured just before pouring the next layer on top of it and the temperature was also measured in the lowermost layer and in the first intermediate layer, i.e. in the layer applied on top of the lowermost layer. The average temperature of each of the layers just before a next layer was applied thereon was calculated by means of a temperature model. The dicalcium silicate (C2S) contents and the calcium magnesium silicate (CMS) contents (sum of merwinite, bredigite and diopside) of the different layer was measured after the solidification and cooling of the layers. The different results are indicated in the following table.

**Table 2: Average temperature and C2S and CMS content of the different layers.**

| Layer | Steel slag type | Weight (tons)t | Time in slag pot (min) | Time till next layer (min) | CMS (%) | C2S (%) | Average layer temp. (°C) |
|---|---|---|---|---|---|---|---|
| 1 (bottom) | AOD | 38 | 49 | 135 | / | / | / |
| 2 | AOD | 25 | 71 | 60 | 54.7 | 22.6 | 1049 |
| 3 | EAF | 29 | 110 | 25 | 52.3 | 20.2 | 1164 |
| 4 | AOD | 25 | 37 | 60 | / | / | / |
| 5 | EAF | 15 | 28 | 90 | 15.6 | 65.6 | 1175 |
| 6 | EAF | 29 | 19 | 55 | 18.9 | 60.4 | 750 |
| 7 | AOD | 28 | 40 | 30 | 24.8 | 61.4 | 1059 |
| 8 | EAF | 16 | 25 | 35 | 21.5 | 56.7 | 1126 |
| 9 | AOD | 25 | 17 | 25 | 44.1 | 12.3 | 1266 |
| 10 | EAF | 15 | 18 | 130 | 37.8 | 44.4 | 635 |
| 11 | EAF | 23 | 15 | 30 | 42.3 | 25.4 | 1111 |
| 12 | AOD | 20 | 22 | 75 | 38.5 | 38.3 | 714 |
| 13 | AOD | 21 | 13 | 15 | 28.2 | 29.2 | 842 |
| 14 | EAF | 22 | 45 | 90 | 22.7 | 49.4 | 541 |
| 15 | AOD | 23 | 10 | 10 | 34.9 | 34.7 | 1173 |
| 16 | EAF | 22 | 6 | 95 | 22.4 | 37.2 | 688 |
| 17 | EAF | 17 | 20 | 40 | 18.1 | 67.2 | 858 |
| 18 | AOD | 21 | 22 | 35 | 66.8 | 16.6 | 1097 |
| 19 | EAF | 16 | 18 | 40 | 31.0 | 47.5 | 774 |
| 20 | AOD | 21 | 23 | 90 | 56.8 | 11.6 | ! |
| 21 | EAF | 17 | 20 | 40 | 12.6 | 71.2 | 639 |
| 22 (top) | AOD | 17 | 23 | / | 62.5 | 5.8 | / |

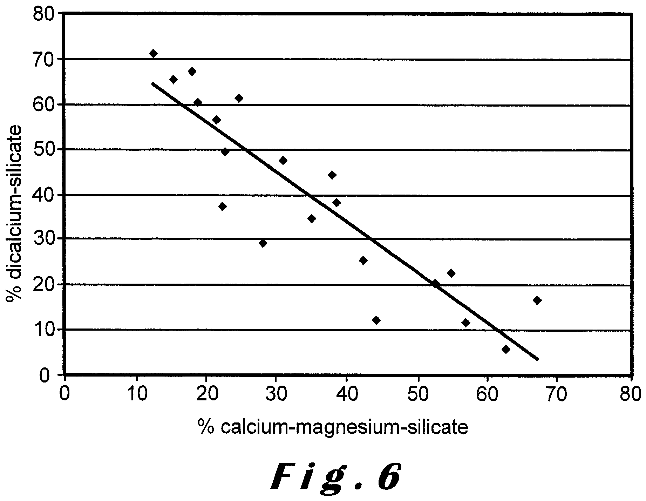

Figure 6 is a graph with a linear trend line illustrating the relationship between the C2S and the CMS contents of the different layers. It can be seen that there is a linear relationship between these two contents. Since in the solidification method of the present invention the formation of CMS is enhanced by keeping the steel slag for a sufficient period of time at a higher temperature before starting the water cooling process, the C2S content, and thus the formation of fines, should be reduced accordingly.

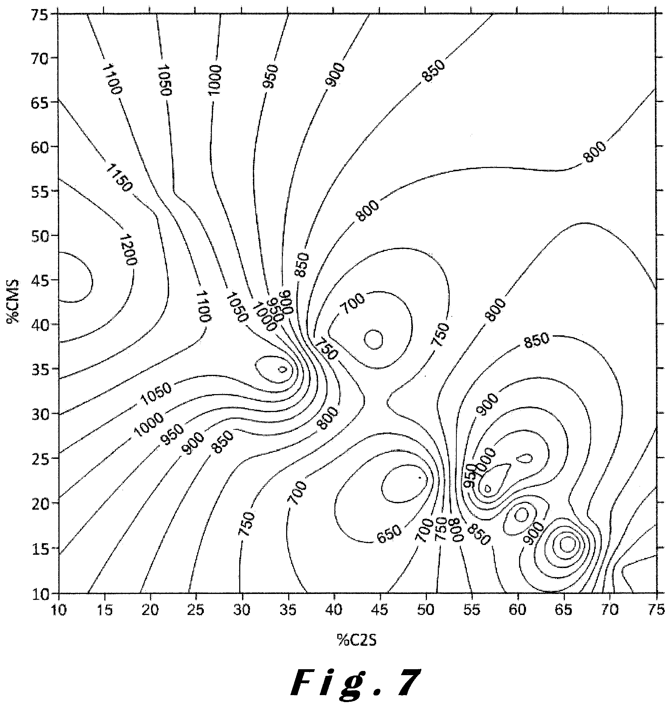

Figure 7 is a graph illustrating the relationship between the C2S contents and the CMS contents in function of the average temperature of the different layers just before the next tipping, i.e. just before applying the next layer. It can be seen that generally the formation of C2S is suppressed when the average temperature of the layer just before the next layer is applied on top of it is higher. This effect is more pronounced for AOD slag. Due to the lower basicity, the EAF slag is less sensitive to dusting at lower temperatures.

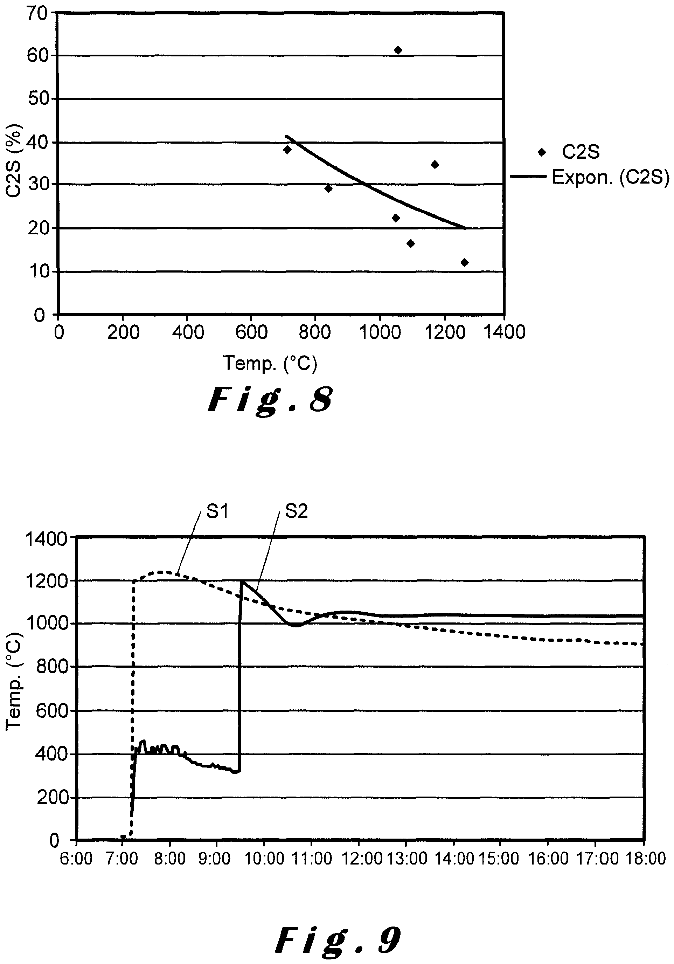

Figure 8 is a graph with an exponential trend line illustrating the relationship, for the different layers of AOD slag, between the average temperature of the layer just before the next tipping and the C2S content. It can be seen that the higher the temperature, the lower the C2S content.

Figure 9 is a graph showing the temperatures measured for the first 11 hours by the temperature probes in the lowermost layer and in the layer applied just on top of it (positioned at a height of 0.07 and 0.27 m from the bottom). It can be seen that, notwithstanding the large volume of the first layer of liquid steel slag, the temperature dropped to a lower level, i.e. to a temperature of about 900°C after 11 hours whilst, due to the insulation provided by this lowermost layer and the additional heat applied by the liquid slag layers poured on top of it, the temperature of the second layer initially dropped quite quickly with about 200°C (to about 1000°C), until the next layer of liquid slag was applied thereon, after which the temperature of the second layer remained almost constant at a temperature of about 1050°C. At this temperature, bredigite and merwinite are the main crystalline phases that are formed. The method of the present invention enables to maintain this temperature, without having to apply heat to the slag layers, until an equilibrium is established, i.e. until a maximum amount of bredigite and especially of merwinite is formed. During the next water cooling phase, the solidified slag layers are cooled down more quickly to avoid the formation of beta and gamma dicalcium silicates starting especially from the bredigite phases. The amount of these bredigite phases is preferably reduced by adding a glassy compound such as ground waste glass to the liquid slag.

In this experiment an amount of borates was added to the AOD steel slag to avoid the transition from β to γ-C2S. Due to the low basicity of the EAF slag, i.e. a basicity of about 1.4, no borate was added thereto. The AOD slag had a basicity of about 1.8.

## Claims

1. A method for solidifying liquid steel slag (2) to produce solid steel slag, which liquid steel slag comprises at least the elements calcium, silicon and oxygen and has a basicity, defined as the ratio between its calcium content, expressed as wt.% CaO, and its silicon content, expressed as wt.% SiO₂, which is higher than 1.2, which method comprises the steps of:
- pouring at least four successive layers (6-8) of said liquid steel slag (2) in a reservoir (3), which successive layers comprise a lowermost layer (6), an uppermost layer (7) and at least two intermediate layers (8);
- allowing the liquid steel slag (2) to solidify in the reservoir (3); and
- cooling the solidified steel slag in the reservoir (3) by applying water onto the solidified steel slag,
**characterised in that**
- said reservoir (3) has a bottom (4) delimited by side walls (5), which bottom (4) has a surface area of S m²;
- said successive layers (6-8) of liquid steel slag are poured on top of one another in said reservoir (3), with at least said intermediate layers (8) having a volume of at least S x 0.03 m³ and;
- said water cooling step is started after having poured said uppermost layer (7) of liquid steel slag in the reservoir (3); and
- the temperature of each of said intermediate layers (8), determined as a volume weighted average over the respective intermediate layer (8), is kept at least until the start of said water cooling step, and this for at least one hour, preferably for at least two hours, between 1300°C and a minimum temperature which is equal to or higher than a first temperature, which first temperature is the temperature as from which β-dicalcium silicate is formed in the steel slag when the liquid steel slag is cooled down at a cooling rate of 10°C/min to room temperature.

2. A method according to claim 1, **characterised in that** said minimum temperature is equal to or higher than 700°C, preferably equal to or higher than 750°C, more preferably equal to or higher than 800°C, most preferably equal to or higher than 850°C and even more preferably equal to or higher than 900°C.

3. A method according to claim 1 or 2, **characterised in that** said first temperature is lowered by adding a phosphorus containing compound to the liquid slag, in particular a phosphate and/or a pyrophosphate containing compound.

4. A method according to any one of the claims 1 to 3, **characterised in that** the basicity of the liquid steel slag is lowered by adding a glassy material thereto after the liquid steel slag has been separated off from the liquid steel, which glassy material has a further basicity, defined as the ratio between its calcium content, expressed as wt.% CaO, and its silicon content, expressed as wt.% SiO₂, which is smaller than 0.20, and preferably smaller than 0.15.

5. A method according to claim 4, **characterised in that** said glassy material comprises at least 50 wt.%, preferably at least 60 wt.% silicon expressed as SiO₂, said glassy material preferably comprising glass that has preferably been crushed, in particular soda-lime-silica glass.

6. A method according to any one of the claims 1 to 5, **characterised in that** the volume of said intermediate layers (8) of liquid steel slag is at most S x 0.5 m³, preferably at most S x 0.4 m³, more preferably at most S x 0.3 m³ and most preferably at most S x 0.2 m³.

7. A method according to any one of the claims 1 to 6, **characterised in that** said water cooling step is started less than ten hours, preferably less than seven hours and more preferably less than five hours after having poured said uppermost layer (7) of liquid steel slag (2) in the reservoir (3).

8. A method according to any one of the claims 1 to 7, **characterised in that** said successive layers (6-8) have a total height of less than 2.0 m, preferably less than 1.8 m, more preferably less than 1.6 m and most preferably less than 1.4 m.

9. A method according to any one of the claims 1 to 8, **characterised in that** said predetermined time intervals are shorter than 90 minutes, preferably shorter than 75 minutes, more preferably shorter than 60 minutes and most preferably shorter than 50 minutes.

10. A method according to any one of the claims 1 to 9, **characterised in that** the temperatures of the liquid steel slag (2) upon being poured in said successive layers (6-8) are higher than 800°C, preferably higher than 900°C and more preferably higher than 950°C.

11. A method according to any one of the claims 1 to 10, **characterised in that** the temperature of each of said intermediate layers (8), determined as a volume weighted average over the respective intermediate layer (8), drops at an average rate which is not higher than 50°C/min, preferably not higher than 40°C/min, more preferably not higher than 30°C/min and most preferably not higher than 20°C/min as from being applied until being covered by a further intermediate layer (8) or by said uppermost layer (7).

12. A method according to any one of the claims 1 to 11, **characterised in that** the temperature of each of said intermediate layers (8), determined as a volume weighted average over the respective intermediate layer (8), is kept before the start of said water cooling step, for at least one hour, preferably for at least two hours, below 1200°C and preferably below 1100°C.

13. A method according to any one of the claims 1 to 12, **characterised in that** said successive layers (6-8) of liquid steel slag (2) are poured at predetermined temperatures and at predetermined time intervals on top of one another in said reservoir (3) and the temperature of each of said intermediate layers (8), determined as a volume weighted average over the respective intermediate layer (8), is kept above said minimum temperature by keeping said predetermined temperatures sufficiently high and said predetermined time intervals sufficiently short.

14. A method according to any one of the claims 1 to 13, **characterised in that** the solidified steel slag is cooled down by applying water onto the uppermost steel slag layer (7) at least until said temperature of each of said intermediate layers is lower than 400°C, preferably lower than 300°C and more preferably lower than 200°C.

15. A method according to any one of the claims 1 to 14, **characterised in that** the basicity of the liquid steel slag is higher than 1.4 and in particular higher than 1.6.

## Patentansprüche

1. Ein Verfahren zur Verfestigung flüssiger Stahlschlacke (2) zur Herstellung fester Stahlschlacke, wobei die flüssige Stahlschlacke zumindest die Elemente Calcium, Silicium und Sauerstoff umfasst und eine Basizität hat, definiert als das Verhältnis zwischen ihrem Calciumgehalt, ausgedrückt als Gew.-% CaO, und ihrem Siliciumgehalt, ausgedrückt als Gew.-% SiO₂, welche höher ist als 1.2, wobei das Verfahren folgende Schritte umfasst:
- Gießen von zumindest vier aufeinander folgenden Schichten (6-8) der erwähnten flüssigen Stahlschlacke (2) in einen Behälter (3), wobei die aufeinander folgenden Schichten eine unterste Schicht (6), eine oberste Schicht (7) und zumindest zwei zwischenliegende Schichten (8) umfassen;
- Verfestigen Lassen der flüssigen Stahlschlacke (2) im Behälter (3); und
- Abkühlen der verfestigten Stahlschlacke im Behälter (3) durch Auftragen von Wasser auf die verfestigte Stahlschlacke,
**dadurch gekennzeichnet, dass**
- der erwähnte Behälter (3) einen Boden (4) hat, begrenzt durch Seitenwände (5), wobei der Boden (4) eine Oberfläche von S m² hat;
- die erwähnten aufeinander folgenden Schichten (6-8) von flüssiger Stahlschlacke im erwähnten Behälter (3) aufeinander gegossen werden, wobei zumindest die erwähnten zwischenliegenden Schichten (8) ein Volumen von mindestens S x 0,03 m³ haben und;
- der erwähnte Schritt des Abkühlens mit Wasser begonnen wird, nachdem die erwähnte oberste Schicht (7) von flüssiger Stahlschlacke in den Behälter (3) gegossen wurde; und
- die Temperatur jeder der erwähnten zwischenliegenden Schichten (8), bestimmt als ein volumengewichteter Durchschnitt über die jeweilige zwischenliegende Schicht (8), zumindest bis zum Beginn des erwähnten Schrittes des Abkühlens mit Wasser mindestens eine Stunde lang, bevorzugt mindestens zwei Stunden, zwischen 1.300 °C und einer Mindesttemperatur gehalten wird, welche gleich oder höher als eine erste Temperatur ist, wobei diese erste Temperatur die Temperatur ist, ab der β-Dicalciumsilikat in der Stahlschlacke gebildet wird, wenn die flüssige Stahlschlacke bei einer Kühlgeschwindigkeit von 10 °C/min auf Raumtemperatur abgekühlt wird.

2. Ein Verfahren nach Anspruch 1, **dadurch gekennzeichnet, dass** die erwähnte Mindesttemperatur gleich oder höher als 700 °C ist, bevorzugt gleich oder höher als 750 °C, noch besser gleich oder höher als 800 °C, am besten gleich oder höher als 850 °C und sogar noch besser gleich oder höher als 900 °C.

3. Ein Verfahren nach Anspruch 1 oder 2, **dadurch gekennzeichnet, dass** die erwähnte erste Temperatur durch Zusatz einer phosphorhaltigen Verbindung zur flüssigen Schlacke gesenkt wird, insbesondere eine phosphat- und/oder eine pyrophosphathaltige Verbindung.

4. Ein Verfahren nach irgendeinem der Ansprüche 1 bis 3, **dadurch gekennzeichnet, dass** die Basizität der flüssigen Stahlschlacke durch Zusatz eines glasigen Materials dazu gesenkt wird, nachdem die flüssige Stahlschlacke vom flüssigen Stahl getrennt wurde, wobei das glasige Material eine weitere Basizität hat, definiert als das Verhältnis zwischen seinem Calciumgehalt, ausgedrückt als Gew.-% CaO, und seinem Siliciumgehalt, ausgedrückt als SiO₂, die niedriger ist als 0.20, und bevorzugt niedriger als 0.15.

5. Ein Verfahren nach Anspruch 4, **dadurch gekennzeichnet, dass** das erwähnte glasige Material mindestens 50 Gew.-%, bevorzugt mindestens 60 Gew.-% Silicium ausgedrückt als SiO₂ umfasst, wobei das erwähnte glasige Material bevorzugt Glas umfasst, das bevorzugt zermahlen wurde, insbesondere Natron-Kalk-Silikatglas.

6. Ein Verfahren nach irgendeinem der Ansprüche 1 bis 5, **dadurch gekennzeichnet, dass** das Volumen der erwähnten zwischenliegenden Schichten (8) von flüssiger Stahlschlacke höchstens S x 0.5 m³ beträgt, bevorzugt höchstens S x 0.4 m³, noch besser höchstens S x 0.3 m³ und am besten höchstens S x 0.2 m³.

7. Ein Verfahren nach irgendeinem der Ansprüche 1 bis 6, **dadurch gekennzeichnet, dass** der erwähnte Schritt des Abkühlens mit Wasser weniger als zehn Stunden, bevorzugt weniger als sieben Stunden und noch besser weniger als fünf Stunden, nachdem die erwähnte oberste Schicht (7) von flüssiger Stahlschlacke (2) in den Behälter (3) gegossen wurde, begonnen wird.

8. Ein Verfahren nach irgendeinem der Ansprüche 1 bis 7, **dadurch gekennzeichnet, dass** die erwähnten aufeinander folgenden Schichten (6-8) eine Gesamthöhe von weniger als 2.0 m haben, bevorzugt weniger als 1.8 m, noch besser weniger als 1.6 m und am besten weniger als 1.4 m.

9. Ein Verfahren nach irgendeinem der Ansprüche 1 bis 8, **dadurch gekennzeichnet, dass** die erwähnten voreingestellten Zeitintervalle kürzer als 90 Minuten sind, bevorzugt kürzer als 75 Minuten, noch besser kürzer als 60 Minuten und am besten kürzer als 50 Minuten.

10. Ein Verfahren nach irgendeinem der Ansprüche 1 bis 9, **dadurch gekennzeichnet, dass** die Temperaturen der flüssigen Stahlschlacke (2) beim Ausgießen in den erwähnten aufeinander folgenden Schichten (6-8) höher als 800 °C sind, bevorzugt höher als 900 °C und noch besser höher als 950 °C.

11. Ein Verfahren nach irgendeinem der Ansprüche 1 bis 10, **dadurch gekennzeichnet, dass** die Temperatur jeder der erwähnten zwischenliegenden Schichten (8), bestimmt als ein volumengewichteter Durchschnitt über die jeweilige zwischenliegende Schicht (8), mit einer durchschnittlichen Geschwindigkeit sinkt, die nicht mehr als 50 °C/min beträgt, bevorzugt nicht mehr als 40 °C/min, noch besser nicht mehr als 30 °C/min und am besten nicht mehr als 20 °C/min ab dem Auftragen bis zum Bedecken mit einer weiteren zwischenliegenden Schicht (8) oder durch die erwähnte oberste Schicht (7).

12. Ein Verfahren nach irgendeinem der Ansprüche 1 bis 11, **dadurch gekennzeichnet, dass** die Temperatur jeder der erwähnten zwischenliegenden Schichten (8), bestimmt als ein volumengewichteter Durchschnitt über die jeweilige zwischenliegende Schicht (8), vor dem Beginn des erwähnten Schrittes des Abkühlens mit Wasser mindestens eine Stunde lang, bevorzugt mindestens zwei Stunden lang, unter 1.200 °C und bevorzugt unter 1.100 °C gehalten wird.

13. Ein Verfahren nach irgendeinem der Ansprüche 1 bis 12, **dadurch gekennzeichnet, dass** die erwähnten aufeinander folgenden Schichten (6-8) von flüssiger Stahlschlacke (2) bei voreingestellten Temperaturen und in voreingestellten Zeitintervallen im erwähnte Behälter (3) aufeinander gegossen werden und dadurch, dass die Temperatur jeder der erwähnten zwischenliegenden Schichten (8), bestimmt als ein volumengewichteter Durchschnitt über die jeweilige zwischenliegende Schicht (8), über der erwähnten Mindesttemperatur gehalten wird, indem die erwähnten voreingestellten Temperaturen hoch genug und die erwähnten voreingestellten Zeitintervalle kurz genug gehalten werden.

14. Ein Verfahren nach irgendeinem der Ansprüche 1 bis 13, **dadurch gekennzeichnet, dass** die verfestigte Stahlschlacke abgekühlt wird, indem Wasser auf die oberste Stahlschlackenschicht (7) aufgetragen wird, bis zumindest die erwähnte Temperatur jeder der erwähnten zwischenliegenden Schichten niedriger ist als 400 °C, bevorzugt niedriger als 300 °C und noch besser niedriger als 200 °C.

15. Ein Verfahren nach irgendeinem der Ansprüche 1 bis 14, **dadurch gekennzeichnet, dass** die Basizität der flüssigen Stahlschlacke höher ist als 1.4 und insbesondere höher als 1.6.

## Revendications

1. Procédé de solidification d'un laitier d'acier liquide (2) pour produire un laitier d'acier solide, lequel laitier d'acier liquide comprend au moins les éléments calcium, silicium et oxygène et a une basicité, définie comme le rapport entre sa teneur en calcium, exprimée en tant que % en poids de CaO, et sa teneur en silicium, exprimée en tant que % en poids de SiO₂, qui est supérieure à 1.2, lequel procédé comprend les étapes consistant à :
- déverser au moins quatre couches successives (6-8) dudit laitier d'acier liquide (2) dans un réservoir (3), lesquelles couches successives comprennent une couche inférieure (6), une couche supérieure (7) et au moins deux couches intermédiaires (8) ;
- laisser le laitier d'acier liquide (2) se solidifier dans le réservoir (3) ; et
- refroidir le laitier d'acier solidifié dans le réservoir (3) en appliquant de l'eau sur le laitier d'acier solidifié,
**caractérisé en ce que**
- ledit réservoir (3) a un fond (4) délimité par des parois latérales (5), lequel fond (4) a une superficie de S m² ;
- lesdites couches successives (6-8) de laitier d'acier liquide sont déversées les unes au-dessus des autres dans ledit réservoir (3), avec au moins lesdites couches intermédiaires (8) ayant un volume d'au moins S x 0,03 m³ et ;
- ladite étape de refroidissement à l'eau est démarrée après avoir déversé ladite couche supérieure (7) de laitier d'acier liquide dans le réservoir (3) ; et
- la température de chacune desdites couches intermédiaires (8), déterminée en tant que moyenne pondérée en volume sur la couche intermédiaire respective (8), est maintenue au moins jusqu'au début de ladite étape de refroidissement à l'eau, et ceci pendant au moins une heure, de préférence pendant au moins deux heures, entre 1300 °C et une température minimale qui est égale ou supérieure à une première température, laquelle première température est la température à partir de laquelle du silicate β-dicalcique est formé dans le laitier d'acier lorsque le laitier d'acier liquide est refroidi à une vitesse de refroidissement de 10 °C/min jusqu'à la température ambiante.

2. Procédé selon la revendication 1, **caractérisé en ce que** ladite température minimale est égale ou supérieure à 700 °C, de préférence égale ou supérieure à 750 °C, plus préférablement égale ou supérieure à 800 °C, le plus préférablement égale ou supérieure à 850 °C et encore plus préférablement égale ou supérieure à 900 °C.

3. Procédé selon la revendication 1 ou 2, **caractérisé en ce que** ladite première température est abaissée en ajoutant un composé contenant du phosphore au laitier liquide, en particulier un composé contenant un phosphate et/ou un pyrophosphate.

4. Procédé selon l'une quelconque des revendications 1 à 3, **caractérisé en ce que** la basicité du laitier d'acier liquide est abaissée en y ajoutant un matériau vitreux après que le laitier d'acier liquide a été séparé de l'acier liquide, lequel matériau vitreux a une autre basicité, définie en tant que rapport entre sa teneur en calcium, exprimée en tant que % en poids de CaO, et sa teneur en silicium, exprimée en tant que % en poids de SiO₂, qui est inférieur à 0.20, et de préférence inférieur à 0.15.

5. Procédé selon la revendication 4, **caractérisé en ce que** ledit matériau vitreux comprend au moins 50 % en poids, de préférence au moins 60 % en poids de silicium exprimé en tant que SiO₂, ledit matériau vitreux comprenant de préférence du verre qui a été de préférence concassé, en particulier du verre de soude-chaux-silice.

6. Procédé selon l'une quelconque des revendications 1 à 5, **caractérisé en ce que** le volume desdites couches intermédiaires (8) de laitier d'acier liquide est d'au plus S x 0.5 m³, de préférence au plus S x 0.4 m³, plus préférablement au plus S x 0.3 m³ et le plus préférablement au plus S x 0.2 m³.

7. Procédé selon l'une quelconque des revendications 1 à 6, **caractérisé en ce que** ladite étape de refroidissement à l'eau est démarrée moins de dix heures, de préférence moins de sept heures et plus préférablement moins de cinq heures après avoir déversé ladite couche supérieure (7) de laitier d'acier liquide (2) dans le réservoir (3).

8. Procédé selon l'une quelconque des revendications 1 à 7, **caractérisé en ce que** lesdites couches successives (6-8) ont une hauteur totale inférieure à 2.0 m, de préférence inférieure à 1.8 m, plus préférablement inférieure à 1.6 m et le plus préférablement inférieure à 1.4 m.

9. Procédé selon l'une quelconque des revendications 1 à 8, **caractérisé en ce que** lesdits intervalles de temps prédéterminés sont plus courts que 90 minutes, de préférence plus courts que 75 minutes, plus préférablement plus courts que 60 minutes et le plus préférablement plus courts que 50 minutes.

10. Procédé selon l'une quelconque des revendications 1 à 9, **caractérisé en ce que** les températures du laitier d'acier liquide (2) lorsqu'il est déversé dans lesdites couches successives (6-8) sont supérieures à 800 °C, de préférence supérieures à 900 °C et plus préférablement supérieures à 950 °C.

11. Procédé selon l'une quelconque des revendications 1 à 10, **caractérisé en ce que** la température de chacune desdites couches intermédiaires (8), déterminé en tant que moyenne pondérée en volume sur la couche intermédiaire respective (8), descend à une vitesse moyenne qui n'est pas supérieure à 50 °C/min, de préférence pas supérieure à 40 °C/min, plus préférablement pas supérieure à 30 °C/min et le plus préférablement pas supérieure à 20 °C/min entre le moment où elle est appliquée jusqu'au moment où elle est couverte par une autre couche intermédiaire (8) ou par ladite couche supérieure (7).

12. Procédé selon l'une quelconque des revendications 1 à 11, **caractérisé en ce que** la température de chacune desdites couches intermédiaires (8), déterminée en tant que moyenne pondérée en volume sur la couche intermédiaire respective (8), est maintenue avant le début de ladite étape de refroidissement à l'eau, pendant au moins une heure, de préférence pendant au moins deux heures, en dessous de 1200 °C et de préférence en dessous de 1100 °C.

13. Procédé selon l'une quelconque des revendications 1 à 12, **caractérisé en ce que** lesdites couches successives (6-8) de laitier d'acier liquide (2) sont déversées à des températures prédéterminées et à des intervalles de temps prédéterminés les unes au-dessus des autres dans ledit réservoir (3) et la température de chacune desdites couches intermédiaires (8), déterminée en tant que moyenne pondérée en volume sur la couche intermédiaire respective (8), est maintenue au-dessus de ladite température minimale en gardant lesdites températures prédéterminées suffisamment hautes et lesdits intervalles de temps prédéterminés suffisamment courts.

14. Procédé selon l'une quelconque des revendications 1 à 13, **caractérisé en ce que** le laitier d'acier solidifié est refroidi en appliquant de l'eau sur la couche de laitier d'acier supérieure (7) au moins jusqu'à ce que ladite température de chacune desdites couches intermédiaires soit inférieure à 400 °C, de préférence inférieure à 300 °C et plus préférablement inférieure à 200 °C.

15. Procédé selon l'une quelconque des revendications 1 à 14, **caractérisé en ce que** la basicité du laitier d'acier liquide est supérieure à 1.4 et en particulier supérieure à 1.6.
